# EUROPÄISCHE PATENTSCHRIFT

(11) **EP 4 071 943 B1**
(45) Veröffentlichungstag und Bekanntmachung des Hinweises auf die Patenterteilung: **16.08.2023**
(21) Anmeldenummer: 21167573.1
(22) Anmeldetag: 09.04.2021
(51) Int. Cl.: H01R 39/20, H01R 39/26

(54) **KOHLEBÜRSTE ZUR ÜBERTRAGUNG HOHER STRÖME**
CARBON BRUSH FOR TRANSFERRING HIGH CURRENTS
BALAI AU CARBONE DESTINÉ À LA TRANSMISSION DE COURANTS ÉLEVÉS

(43) Veröffentlichungstag der Anmeldung: 12.10.2022
(73) Patentinhaber: Schunk Kohlenstofftechnik GmbH, 35452 Heuchelheim (DE)
(72) Erfinder: MARKOVIC, Milisav, 35444 Biebertal (DE)
(74) Vertreter: advotec.

(56) Entgegenhaltungen:
- EP-A1- 1 351 348
- DE-B4-102008 059 478
- JP-U- S5 727 763

## Beschreibung

Die vorliegende Erfindung betrifft eine Kohlebürste zur Übertragung hoher Ströme mit einem Anschlussteil zum Anschluss eines elektrischen Leiters und einem sich verbrauchenden Kontaktteil mit einer zur Anlage an eine Kommutatoreinrichtung ausgebildeten Kontaktfläche.

Derartige Kohlebürsten sind aus dem Stand der Technik bekannt und werden insbesondere dort eingesetzt, wo über Kohlebürsten hohe Ströme übertragen werden, die nicht selten mehr als 20 A/cm² Bürstenfläche betragen. Derartige Kohlebürsten werden beispielsweise in Motoren und Generatoren eingesetzt, wobei Letzteres in zunehmendem Maße auch im Bereich von Windkraftanlagen der Fall ist.

Aufgrund der hohen übertragenen Leistungen ist es im Falle der genannten Kohlebürsten wichtig, dem Kohlenstoff in ausreichendem Maße metallische Anteile zuzusetzen, die zur Ausbildung möglichst geringer Übergangswiderstände beitragen, um insbesondere die durch den elektrischen Widerstand bedingte Aufheizung der Kohlebürsten möglichst gering zu halten. Hierzu werden die als Formkörper hergestellten Kohlebürsten in der Regel aus einer Formpartikelzusammensetzung aus Kohlenstoff und einem Metall (z. B. Silber) hergestellt. Die aus dem Stand der Technik bekannten Kohlebürsten weisen dabei häufig Silberanteile von mehr als 60 % auf. Dies ist mit erheblichen Herstellungskosten verbunden.

Die bekannten Kohlebürsten werden als im Wesentlichen homogene Formkörper hergestellt, die sowohl in ihrem im Betrieb mit der Schleifringeinrichtung in Kontakt kommenden Kontaktteil als auch in ihrem Anschlussteil, an den der elektrische Anschlussleiter angeschlossen ist, eine gleichbleibende Zusammensetzung aufweisen. Im Ergebnis führt dies dazu, dass ein erheblicher Anteil des in der Kohlebürste vorhandenen Silbers, das sich im Kontaktteil zusammen mit dem Kohlenstoff während der Abnutzung der Kohlebürste verbraucht, im Anschlussteil vorhanden ist, wo die spezifischen Materialeigenschaften des Silbers, die im Zusammenwirken mit dem Kohlenstoff im Kontaktteil erforderlich sind, nicht benötigt werden. Vielmehr dient der Anschlussteil der Kohlebürste insbesondere zur Herstellung einer elektrisch leitfähigen Verbindung mit dem Anschlussleiter. Nach Verbrauch des Kontaktteils wird der Anschlussteil zusammen mit dem darin enthaltenen Silberanteil regelmäßig entsorgt.

So beschreibt beispielsweise die DE 1 215 938 A eine Kohlebürste, die im Wesentlichen aus Silber und Graphit ausgebildet ist. Ein Silbergehalt kann zwischen 60 % und 98 % betragen.

Um die oben genannte Problematik zu überwinden, wird in DE 10 2008 059 478 B4 eine Kohlebürste vorgeschlagen, welche lediglich im Kontaktbereich Silber enthält. Im Anschlussteil dieser Bürste ist kein Silber mehr enthalten. Vielmehr wurde bei dieser Kohlebürste das Silber im Anschlussteil durch Kupfer ersetzt. Dadurch können die Herstellungskosten deutlich gesenkt werden.

Allerdings besteht bei dieser Kohlebürste mit einem Anschlussteil, welcher als Metall Kupfer enthält und einem Kontaktteil, welcher Silber enthält, das Problem, dass beim Herstellungsprozess dieser Kohlebürste, nämlich beim Pressen der beiden Abschnitte, Kupfer auch in den Kontaktteil gelangt. Je nachdem wie weit das Kupfer in den Kontaktteil penetriert gelangt Kupfer beim Arbeitseinsatz dieser Kohlebürste auch auf die zu kontaktierende Kommutatoreinrichtung, wie beispielsweise einen Schleifring. Hierbei wird wiederum eine vorhandene Patina auf der Kommutatoreinrichtung verändert, was nachteilig ist. Insbesondere ist auch die Stromübertragung durch eine derart veränderte Patina nicht optimal.

Der vorliegenden Erfindung liegt die Aufgabe zugrunde, die Nachteile der bekannten Kohlebürsten zu überwinden. Der Erfindung liegt insbesondere die Aufgabe zugrunde, eine Kohlebürste zur Verfügung zu stellen, welche zum einen kostengünstig herstellbar ist und eine gute Stromübertragung gewährleistet.

Diese Aufgabe wird erfindungsgemäß durch eine Kohlebürste der eingangs genannten Art gelöst, welche dadurch gekennzeichnet ist, dass der Anschlussteil einen Silberanteil von ca. 5 Gew.-% bis ca. 39 Gew.-% und der Kontaktteil einen Silberanteil von ca. 40 Gew.-% bis 100 Gew.-% aufweist.

Bei der erfindungsgemäßen Kohlebürste weist sowohl der Anschlussteil als auch der Kontaktteil Silber auf. Allerdings ist der Silberanteil im Anschlussteil geringer als der Silberanteil im Kontaktteil. Im Vergleich zu Kohlebürsten, welche einen gleichmäßig hohen Silberanteil sowohl im Anschlussteil als auch im Kontaktteil aufweisen, kann bei der erfindungsgemäßen Kohlebürste eine beachtliche Menge an Silber eingespart werden. Dagegen ist der Silberanteil im Kontaktteil hoch, was die Funktion der erfindungsgemäßen Kohlebürste positiv beeinflusst. Durch die Tatsache, dass als Metall auch im Anschlussbereich Silber vorhanden ist, lässt sich das oben geschilderte Problem einer Störung einer Patinabildung auf der Kommutatoreinrichung gänzlich vermeiden. Trotzdem bleibt der Anschlussteil anschlussfähig und behält eine feste Struktur aufgrund des Silberanteils.

Bei einer bevorzugten Ausführungsform der erfindungsgemäßen Kohlebürste weist der Anschlussteil einen Silberanteil von ca. 15 Gew.-% bis ca. 39 Gew.-% auf. Diese Mengenbereiche haben sich als besonders vorteilhaft hinsichtlich der Konsistenz sowie Verarbeitbarkeit erwiesen.

Mit Vorteil weist der Kontaktteil einen Silberanteil von ca. 60 Gew.-% bis ca. 98 Gew.-% auf. Ein derartiger Silberanteil ist besonders vorteilhaft hinsichtlich der über die Kohlebürste erfolgenden Stromübertragung.

Vorzugsweise ist die erfindungsgemäße Kohlebürste frei von Kupfer. Dadurch wird die oben genannte Veränderung der Patina auf der Kommutatoreinrichtung sicher verhindert. Auch ist an dem Kontaktteil der Kohlebürste kein Kupfer sichtbar.

Vorzugsweise ist im Anschlussteil eine Anschlusslitze vorgesehen, welche mit dem Bürstenkörper über einen Stopfkontakt, insbesondere mittels Crimpen oder Verpressen verbunden ist.

In der Regel sind der Anschlussteil und der Kontaktteil in einer quer zur Abnutzungsrichtung der Kohlebürste orientierten Schichtübergangszone ineinander übergehend ausgebildet und bilden einen einstückigen Formkörper. In der Regel weisen der Anschlussteil und der Kontaktteil in einem Ursprungszustand eine im Wesentlichen gleiche Länge auf. Unter "Ursprungszustand" wird der Zustand verstanden, in welchem der Kontaktteil noch komplett unverbraucht ist.

Weiter ist erfindungsgemäß ein Verfahren zur Übertragung hoher Ströme mit einer erfindungsgemäßen Kohlebürste ausführbar.

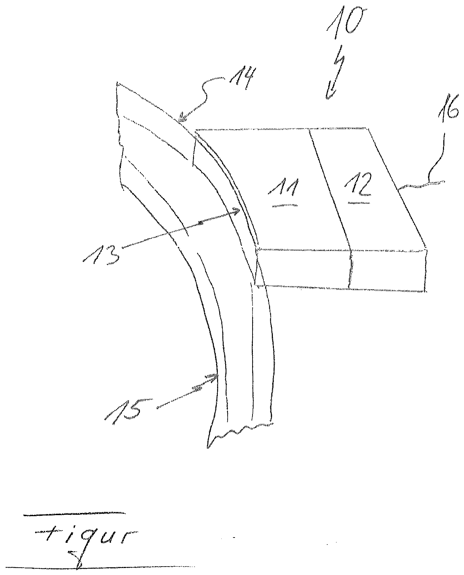

Weitere Merkmale der Erfindung ergeben sich aus der nachfolgenden Beschreibung eines bevorzugten Ausführungsbeispiels der Erfindung in Verbindung mit der Zeichnung und den Unteransprüchen. Hierbei können die einzelnen Merkmale für sich allein oder in Kombination miteinander verwirklicht sein.

Die **Figur** zeigt eine schematische Darstellung einer erfindungsgemäßen Kohlebürste 10 mit einem Kontaktteil 11 und einem Anschlussteil 12. Sowohl der Kontaktteil als auch der Anschlussteil sind aus einzelnen Formpartikeln hergestellt. Im ursprünglichen Zustand weisen die Teile 11 und 12 die gleiche Länge L auf.

Der Kontaktteil 11 liegt mit einer Kontaktfläche 13 auf einer Kontaktoberfläche 14 einer Kommutatoreinrichtung 15 an. Die Kommutatoreinrichtung ist im vorliegenden Ausführungsbeispiel ein Schleifring 15. Die Kontaktfläche 13 des Kontaktteils 11 ist an die Form des Außenumfangs des Schleifrings 15 angepasst, so dass sich die Kontaktfläche 13 des Kontaktteils 11 an die Kontaktoberfläche 14 des Schleifrings 15 anschmiegen kann. Am freien Ende des Anschlussteils 12 ist eine Litze 16 in dem Anschlussteil 12 eingestampft.

Der Kontaktteil 11 besteht bei der Kohlebürste 10 aus einem Gemenge von 90 Gew.-% Silber und 10 Gew.-% Kohlenstoff und wird in Richtung des Anpressdrucks, welcher in der **Figur** durch den Pfeil angedeutet ist, verbraucht.

Der Anschlussteil 12 der Bürste 10 besteht aus einem Gemenge von 20 Gew.-% Silber und 80 Gew.-% Kohlenstoff. Der Kohlenstoff des Anschlussteils und des Kontaktteils liegt in Form von Graphit vor.

Die Herstellung der Bürste 10 kann durch ein Formpressverfahren erfolgen, bei welchem durch geeignete Verdichtung die Kohlebürste 10 als Formstück ausgebildet wird.

Die Kohlebürste 10 ist im vorliegenden Ausführungsbeispiel frei von Kupfer. Dies verhindert eine Patinabildung am Schleifring 15.

## Patentansprüche

1. Kohlebürste (10) zur Übertragung hoher Ströme mit einem Anschlussteil (12) zum Anschluss eines elektrischen Leiters und einem sich verbrauchenden Kontaktteil (11) mit einer zur Anlage an eine Kommutatoreinrichtung (15) ausgebildeten Kontaktfläche (13), wobei der Kontaktteil einen Silberanteil von ca. 40 Gew.-% bis 100 Gew.-% aufweist,
**dadurch gekennzeichnet,**
**dass** der Anschlussteil (12) einen Silberanteil von ca. 5 Gew.-% bis ca. 39 Gew.-% aufweist.

2. Kohlebürste nach Anspruch 1,
**dadurch gekennzeichnet,**
**dass** der Anschlussteil (12) einen Silberanteil von ca. 10 Gew.-% bis ca. 39 Gew.-%, vorzugsweise von ca. 15 Gew.-% bis ca. 39 Gew.-% aufweist.

3. Kohlebürste nach einem der Ansprüche 1 oder 2,
**dadurch gekennzeichnet,**
**dass** der Kontaktteil (11) einen Silberanteil von ca. 80 Gew.-% bis ca. 98 Gew.-% aufweist.

4. Kohlebürste nach einem der vorhergehenden Ansprüche,
**dadurch gekennzeichnet,**
**dass** sie frei von Kupfer ist.

5. Kohlebürste nach einem der vorhergehenden Ansprüche,
**dadurch gekennzeichnet,**
**dass** im Anschlussteil (12) eine Anschlusslitze (16) vorgesehen ist, welche mit dem Bürstenkörper über einen Stopfkontakt verbunden ist, wobei die Anschlusslitze (16) mit dem Bürstenkörper vorzugsweise mittels Crimpen verbunden ist oder wobei die Anschlusslitze (16) mit dem Bürstenkörper verpresst ist.

6. Kohlebürste nach einem der vorhergehenden Ansprüche,
**dadurch gekennzeichnet,**
**dass** der Anschlussteil (12) und der Kontaktteil (11) in einer quer zur Abnutzungsrichtung der Kohlebürste (10) orientierten Schichtübergangszone ineinander übergehend ausgebildet sind und einen einstückigen Formkörper bilden.

7. Kohlebürste nach einem der vorhergehenden Ansprüche,
**dadurch gekennzeichnet,**
**dass** der Anschlussteil (12) und der Kontaktteil (11) in einem Ursprungszustand eine im Wesentlichen gleiche Länge (L) aufweisen.

## Claims

1. A carbon brush (10) for transferring high currents having a connective piece (12) for connecting an electric conductor and a consumable contact piece (11) having a contact surface (13) configured for abutting against a commutator element (15), the contact piece having a silver content of approximately 40 % by weight to 100 % by weight
**characterized in that**
the connective piece (12) has a silver content of approximately 5 % by weight to approximately 39 % by weight.

2. The carbon brush according to claim 1,
**characterized in that**
the connective piece (12) has a silver content of approximately 10 % by weight to approximately 39 % by weight, preferably of approximately 15 % by weight to approximately 39 % by weight.

3. The carbon brush according to claim 1 or 2,
**characterized in that**
the contact piece (11) has a silver content of approximately 80 % by weight to approximately 98 % by weight.

4. The carbon brush according to any one of the preceding claims,
**characterized in that**
the carbon brush is free of copper.

5. The carbon brush according to any one of the preceding claims,
**characterized in that**
a pigtail (16) which is connected to the brush body via a plug connection is provided in the connective piece (12), the pigtail (16) being connected to the brush body preferably by means of crimping or the pigtail (16) being pressed together with the brush body.

6. The carbon brush according to any one of the preceding claims,
**characterized in that**
the connective piece (12) and the contact piece (11) are formed in a layer merging zone directed transversally to the abrasion direction of the carbon brush (10) so as to merge with one another, and form a one-piece mold.

7. The carbon brush according to any one of the preceding claims,
**characterized in that**
the connective piece (12) and the contact piece (11) are essentially of the same length (L) in an initial state.

## Revendications

1. Balai de charbon (10) pour le transfert de courants élevés ayant une pièce de connexion (12) pour la connexion d'un conducteur électrique et ayant une pièce de contact (11) consommable ayant une surface de contact (13) configurée pour l'appui contre un élément de commutateur (15), la pièce de contact ayant un teneur en argent d'environ 40 % en poids à 100 % en poids
**caractérisé en ce que**
la pièce de connexion (12) a un teneur en argent d'environ 5 % en poids à environ 39 % en poids.

2. Balai de charbon selon la revendication 1,
**caractérisé en ce que**
la pièce de connexion (12) a un teneur en argent d'environ 10 % en poids à environ 39 % en poids, de préférence d'environ 15 % en poids à environ 39 % en poids.

3. Balai de charbon selon la revendication 1 ou la revendication 2,
**caractérisé en ce que**
la pièce de contact (11) a un teneur en argent d'environ 80 % en poids à environ 98 % en poids.

4. Balai de charbon selon l'une quelconque des revendications précédentes,
**caractérisé en ce que**
le balai de charbon est sans cuivre.

5. Balai de charbon selon l'une quelconque des revendications précédentes,
**caractérisé en ce**
**qu'**un fibre amorcé (16) qui est relié au corps de balai par une fiche de raccordement est prévu dans la pièce de connexion (12), le fibre amorcé (16) étant relié au corps de balai de préférence au moyen du sertissage ou le fibre amorcé (16) étant pressé avec le corps de balai.

6. Balai de charbon selon l'une quelconque des revendications précédentes,
**caractérisé en ce que**
la pièce de connexion (12) et la pièce de contact (11) sont formées dans une zone de transition de couche orientée transversalement au sens d'abrasion du balai de charbon (10) pour provoquer une transition l'une avec l'autre et forment un corps de moule intégral.

7. Balai de charbon selon l'une quelconque des revendications précédentes,
**caractérisé en ce que**
la pièce de connexion (12) et la pièce de contact (11) ont une longueur (L) sensiblement égale dans un état initiale.
